# EUROPEAN PATENT SPECIFICATION

(11) **EP 2 876 559 B1**
(45) Date of publication and mention of the grant of the patent: **27.04.2016**
(21) Application number: 14197840.3
(22) Date of filing: 26.01.2011
(51) Int. Cl.: G06F 13/28, G06F 13/32

(54) **DMA controller and data readout device**
DMA-Steuerung und Datenauslesevorrichtung
Contrôleur DMA et dispositif de lecture de données

(30) Priority: 21.09.2010 JP 2010210798
(43) Date of publication of application: 27.05.2015
(62) Divisional of application: 11826589.1
(73) Proprietor: Mitsubishi Electric Corporation, Chiyoda-ku Tokyo 100-8310 (JP)
(72) Inventor: Nakata, Masanori, Tokyo, 100-8310 (JP); Kushiro, Noriyuki, Tokyo, 100-8310 (JP); Ito, Yoshiaki, Tokyo, 100-8310 (JP); Koizumi, Yoshiaki, Tokyo, 100-8310 (JP)
(74) Representative: Pfenning, Meinig & Partner mbB

(56) References cited:
- WO-A2-2008/024670
- JP-A- S6 072 057
- US-A- 5 878 272
- US-A1- 2006 259 662
- US-A1- 2008 177 909
- US-A1- 2009 287 858

## Description

### Technical Field

The present invention relates to a technique of reading data from a readable/writable storage medium using a DMA (direct memory access) controller.

### Background Art

For example, the CPU of a device using a flash memory as a storage medium has to properly identify the location (a physical address) where desired data are stored in a memory region of the flash memory. However, when the memory region is large, the data search workload of the CPU is increased. Then, a known method for reducing the workload of the CPU uses a DMA controller to read data as disclosed in Patent Literature 1.

In such a case, the CPU sets an address from which reading starts (a reading start address) and a reading data size (for example, in bytes) in the reading start address register and reading data size register of a DMA controller. The DMA controller reads data of the specified number of bytes from the specified reading start address, outputs an interrupt signal, and ends the data reading operation.

As the above interrupt signal is output, the CPU checks whether the read data are desired data. Then, if the read data are not desired data, the CPU updates the value in the reading start address register and activates the DMA controller again so that the DMA controller reads data. From then on, the CPU repeats the above control until desired data are found.

### Prior Art Literature

### Patent Literature

Patent Literature 1: Unexamined Japanese Patent Application Kokai Publication No. 2005-100247

US2006/0259662 discloses a data reading device in accordance to the preamble of claim 1.

US2008/0177909 discloses content terminated DMA transfers.

### Disclosure of the Invention

### Problem to be Solved by the Invention

In the above case, if the CPU and DMA controller communicate frequently until desired data are found, the workload of the CPU is increased and the performance of the entire device may be deteriorated. On the other hand, if a large value is set in the reading data size register, the frequency of the CPU giving instructing to the DMA controller, namely the number of times of interruption, can be reduced. However, a large amount of non-desired data are read, which is inefficient.

An exemplary objective of the present invention is to provide a DMA controller and the like enabling efficient data reading from readable/writable recording media without increasing the workload of the CPU.

### Means for Solving the Problem

In order to achieve the above objective, the present invention defines a data reading device in accordance to claim 1 as appended.

The data reading device comprising a CPU, a first DMA controller, a second DMA controller, an external memory, an external memory interface, a first internal memory, and a second internal memory, wherein:
the CPU stores in the first internal memory a given number of sets of command parameters comprising a reading start address from which reading starts and the size of data to be read in a single reading operation;
the first DMA controller acquires a set of command parameters from the first internal memory in sequence, and instructs the external memory interface to execute the reading operation based on the set of command parameters;
the external memory interface transfers the data read from the external memory during the reading operation to the second DMA controller;
the second DMA controller writes the data transferred from the external memory interface in the second internal memory in sequence, determines whether the transferred data match data specified by the CPU in advance, and if these data match with each other, outputs a given interrupt signal indicating that the processing of the first and second DMA controllers ends; and
the CPU accesses the second internal memory and searches for the specified data when the interrupt signal is output.

### Effects of the Invention

The present invention automatically updates the reading start address each time a reading operation ends, whereby efficient data reading is executed.

### Brief Description of Drawings

FIG. 1 is a block diagram showing the configuration of a data reading device comprising the DMA controller according to Embodiment 1 of the present invention;
FIG. 2 is a block diagram showing the configuration of the DMA controller according to Embodiment 1;
FIG. 3 is a flowchart showing the proceeding of the data reading procedure of Embodiment 1:
FIG. 4 is an illustration for explaining the update of the reading start address in Embodiment 1;
FIG. 5 is a block diagram showing the configuration of the DMA controller according to Embodiment 2 of the present invention;
FIG. 6 is a flowchart showing the proceeding of the data reading procedure of Embodiment 2:
FIG. 7 is a block diagram showing the configuration of the data reading device according to Embodiment 3 of the present invention;
FIG. 8 is an illustration for explaining sets of command parameters stored in the first internal memory in Embodiment 3;
FIG. 9 is an illustration for explaining the data reading mode by the external memory interface in Embodiment 3;
FIG. 10 is an illustration for explaining the second internal memory in Embodiment 3; and
FIG. 11 is a flowchart showing the proceeding of the data reading procedure of Embodiment 3.

### Mode for Carrying Out the Invention

Embodiments of the present invention will be described hereafter with reference to the drawings.

### (Embodiment 1)

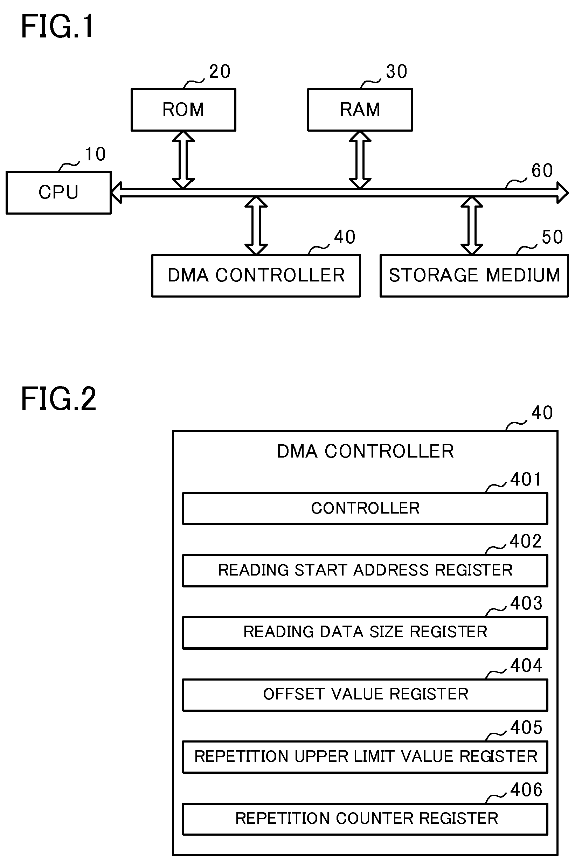

FIG. 1 is a block diagram showing the configuration of a data reading device comprising the DMA controller according to Embodiment 1 of the present invention. This data reading device is installed in a device that is, for example, connected to multiple power conditioners of a photovoltaic power generation system to collect data regarding the operation state of each power conditioner (so-called, a data logger).

As shown in FIG. 1, the data reading device comprises a CPU (central processing unit) 10, a ROM (read only memory) 20, a RAM (random access memory) 30, a DMA (direct memory access) controller 40, and a storage medium 50; these components are connected to each other via a bus 60.

The CPU 10 controls the operation of the entire device including the data reading device based on various programs and data stored in the ROM 20. The RAM 30 is used as a work memory in which data to be transferred to the storage medium 50 and read data are temporarily stored.

The DMA controller 40 access the storage medium 50 according to instruction from the CPU 10, reads data, and stores the read data in the RAM 30. The storage medium 50 is, for example, a nonvolatile readable/writable storage medium, and a flash memory in this embodiment.

As described in detail later, the CPU 10 of the data reading device in this embodiment instructs the DMA controller 40 to execute a data reading procedure in order to identify the location (in other words, a physical address) where desired data are stored in the storage medium 50 prior to processing (reading or deleting) the data.

FIG. 2 is a block diagram showing the configuration of the DMA controller 40. The DMA controller 40 comprises a controller 401 (end notification means) executing a data reading procedure and multiple registers storing information used in the data reading procedure (a reading start address register 402, a reading data size register 403, an offset value register 404, a repetition upper limit value register 405, and a repetition counter register 406).

The CPU 10 stores an address from which reading starts (a reading start address) in the reading start address register 402 when the CPU 10 needs to identify the location where desired data (for example, a sector number) are stored. Furthermore, the CPU 10 stores a reading data size (for example, in bytes) presenting the size of data to be read in single reading operation in the reading data size register 403, an offset value for updating the reading start address each time single reading operation ends in the offset value register 404, and an upper limit value of the number of times of repetition of single reading operation in the repetition upper limit value register 405. Furthermore, the CPU 10 clears the repetition counter register 406 to zero. The repetition counter register 406 stores a counter value that is incremented each time a single reading operation is repeated.

Then, the CPU 10 outputs a given control signal to the DMA controller 40. Triggered by the control signal, the DMA controller 40 starts the data reading procedure. From then on, the DMA controller 40 continues to execute the data reading procedure without any control from the CPU 10 until the number of times of repetition of a single reading procedure reaches the upper limit value.

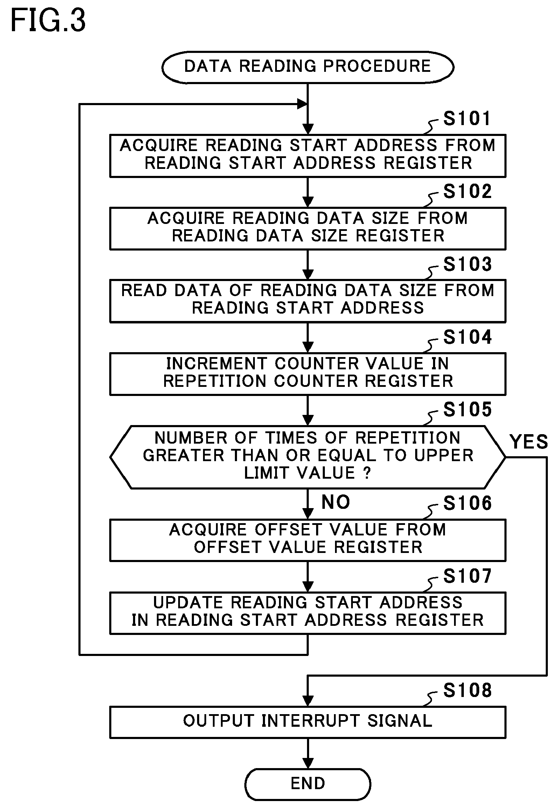

FIG. 3 is a flowchart showing the proceeding of the data reading procedure executed by the DMA controller 40. As described above, the data reading procedure starts as the CPU 10 outputs a given control signal.

First, the controller 401 of the DMA controller 40 acquires the reading start address from the reading start address register 402 (Step S101), and acquires the reading data size from the reading data size register 403 (Step S102).

Then, the controller 401 reads data of the reading data size from the memory region of the storage medium 50 indicated by the reading start address (Step S103), and stores the read data in the RAM 30. The controller 401 increments the counter value in the repetition counter register 406 when this single reading operation ends (Step S 104).

Then, the controller 401 determines whether the counter value in the repetition counter register 406 (namely, the number of times of repetition) has reached the value in the repetition upper limit value register 405 (namely, the upper limit value of the number of times of repetition) (Step S105). As a result, if the number of times of repetition has not reached the upper limit value (Step S105; NO), the controller 401 acquires the offset value from the offset value register 404 (Step S106), and adds the acquired offset value to update the reading start address in the reading start address register 402 (Step S107). Then, the controller 401 executes the processing of the Step S101 again.

On the other hand, if the number of times of repetition of a reading operation has reached the predetermined upper limit value (Step S105; YES), the controller 401 outputs a given interrupt signal (Step S108), and ends the data reading procedure.

As the above interrupt signal is output, the CPU 10 accesses the RAM 30 and finds out whether desired data are present/absent. If desired data are present, the CPU 10 identifies the location (a physical address) where the data are stored from the reading start address in the reading start address register 402 and the counter value in the repetition counter register 406 of the DMA controller 40 at the time.

On the other hand, if desired data are not present in the RAM 30, the CPU 10 stores a new reading start address in the reading start address register 402 and instructs the DMA controller 40 to execute the data reading procedure again.

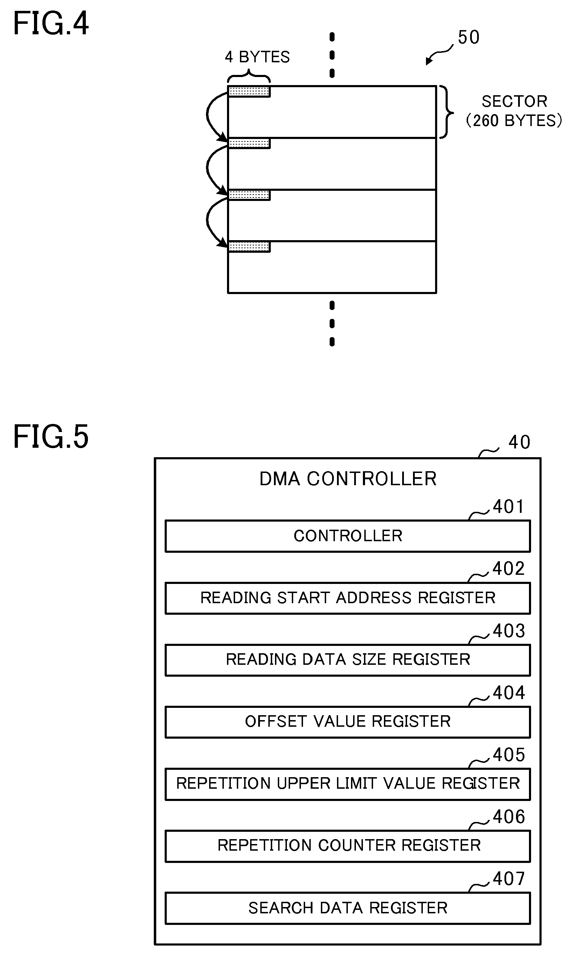

For example, as shown in FIG. 4, if data (for example, a sector number) desired by the CPU 10 are present at a given location (for example, the first 4 bytes) in each sector (for example, 260 bytes), reading all data in a sector is not efficient. However, in such a case, the DMA controller 40 of this embodiment has 4 (bytes) set in the reading data size register 403 and 260 (bytes) set in the offset value register 404; then, the reading start address skips 260 bytes each time a 4-byte reading operation ends. Therefore, data desired by the CPU 10 can be read more efficiently.

Here, the reading start address in the reading start address register 402 can be advanced by one byte each time one byte is read from the storage medium 50. In such a case, the value (for example, 256 bytes) obtained by subtracting the reading data size (for example, 4 bytes) from the sector size (for example, 260 bytes) is stored in the offset value register 404.

### (Embodiment 2)

The DMA controller according to Embodiment 2 of the present invention will be described hereafter. It is assumed that the DMA controller of Embodiment 2 is also installed in the similar data reading device as in Embodiment 1. The same components as of the data reading device of Embodiment 1 are referred to by the same reference numbers. FIG. 5 is a block diagram showing the configuration of a DMA controller 40 of this embodiment. As shown in FIG. 5, the DMA controller 40 of this embodiment additionally comprises a search data register 407. The search data register 407 stores data (for example, a sector number) desired by the CPU 10.

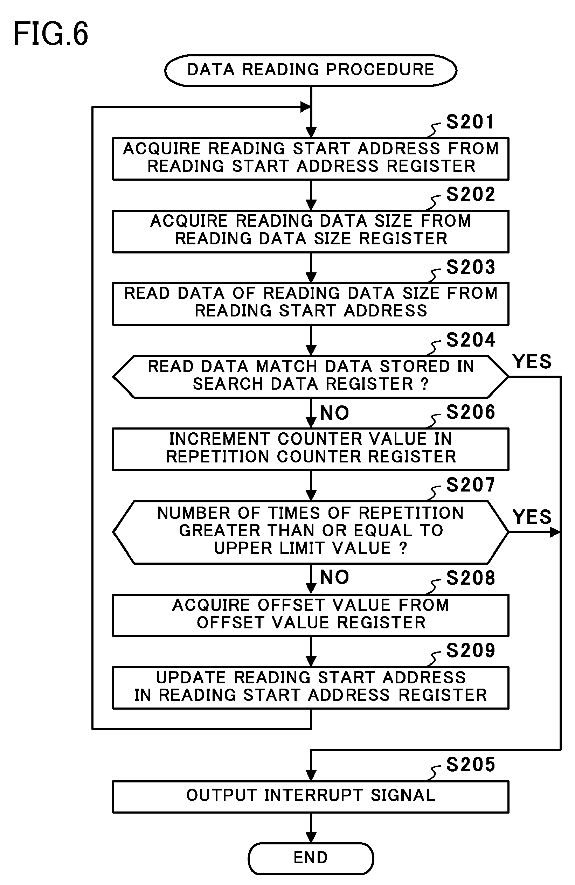

The proceeding of the data reading procedure executed by the DMA controller 40 of this embodiment will be described with reference to the flowchart of FIG. 6. This data reading procedure also starts as the CPU 10 outputs a given control signal as in Embodiment 1.

First, the controller 401 of the DMA controller 40 acquires the reading start address from the reading start address register 402 (Step S201), and acquires the reading data size from the reading data size register 403 (Step S202).

Then, the controller 401 reads data of the reading data size from the memory region of the storage medium 50 indicated by the reading start address (Step S203), and stores the read data in the RAM 30. Then, the controller 401 determines whether the read data match the data stored in the search data register 407 (Step S204).

As a result, if these data match with each other (Step S204; YES), the controller 401 outputs a given interrupt signal (Step S205), and ends the data reading procedure.

On the other hand, if these data do not match with each other (Step S204; NO), the controller 401 increments the counter value in the repetition counter register 406 (Step S206). Then, the controller 401 determines whether the counter value in the repetition counter register 406 (namely, the number of times of repetition) has reached the value in the repetition upper limit value register 405 (namely, the upper limit value of the number of times of repetition) (Step S207).

As a result, if the counter value has not reached the upper limit value (Step S207: NO), the controller 401 acquires the offset value from the offset value register 404 (Step S208), and adds the acquired offset value to update the reading start address in the reading start address register 402 (Step S209). Then, the controller 401 executes the processing of the Step S201 again.

On the other hand, if the number of times of repetition of the reading operation has reached the predetermined upper limit value (Step S207; YES), the controller 401 outputs a given interrupt signal (Step S205), and ends the data reading procedure.

As described above, as data (for example, a sector number) desired by the CPU 10 is being read, the DMA controller 40 of this embodiment outputs an inteirupt signal and immediately ends the data reading procedure. Therefore, the processing can be executed more efficiently and at a higher speed.

### (Embodiment 3)

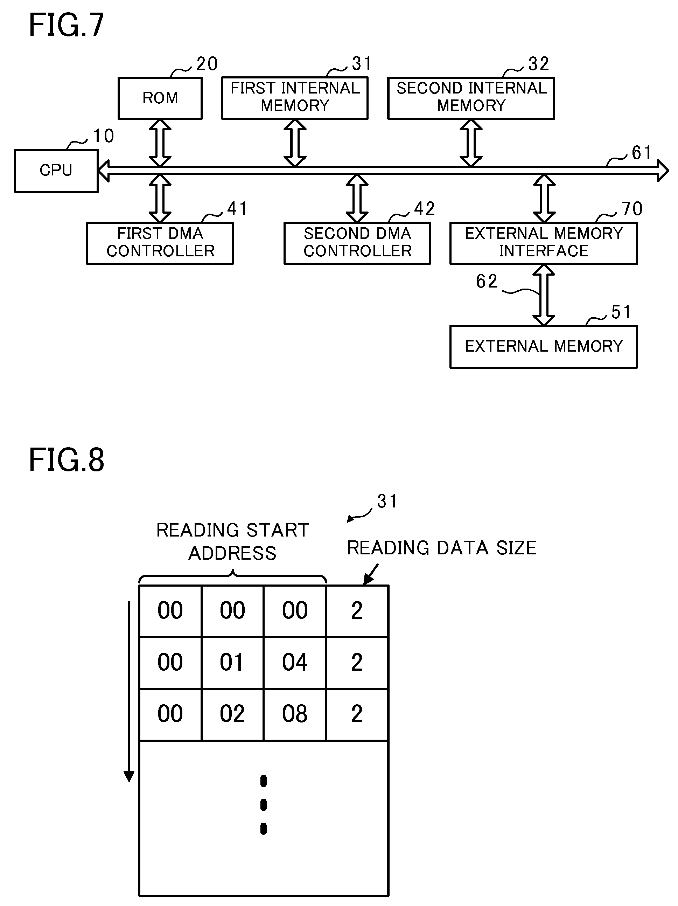

An embodiment of the data reading device of the present invention will be described hereafter. FIG. 7 is a block diagram showing the configuration of the data reading device of this embodiment. As shown in FIG. 7, the data reading device comprises a CPU 10, a ROM 20, a first internal memory 31, a second internal memory 32, a first DMA controller 41, a second DMA controller 42, an external memory interface 70, and an external memory 51.

The CPU 10, ROM 20, first internal memory 31, second internal memory 32, first DMA controller 41, second DMA controller 42, and external memory interface 70 are connected to each other via an internal bus 61. Furthermore, the external memory interface 70 and external memory 51 are connected via an external bus 62 that is a serial bus. In this embodiment, a serial flash memory is used as the external memory 51.

The CPU 10 controls the operation of the entire device including the data reading device based on various programs and data stored in the ROM 20. The first internal memory 31 is, for example, a nonvolatile readable/writable memory such as a SRAM (static random access memory). As described in detail later, the CPU 10 stores in the first internal memory 31 multiple sets of command parameters comprising a reading address and a reading data size as shown in FIG. 8.

The second internal memory 32 is, for example, a nonvolatile readable/writable memory such as a SRAM. As described in detail later, the second internal memory 32 is used as a memory storing data read from the external memory 51 and supplied to the second DMA controller 42.

Like the DMA controller 40 of Embodiment 1, the first and second DMA controllers 41 and 42 enable data reading from the external memory 51 with no interposition of the CPU 10 in order for the CPU 10 to identify the location where desired data (for example, a sector number) are stored.

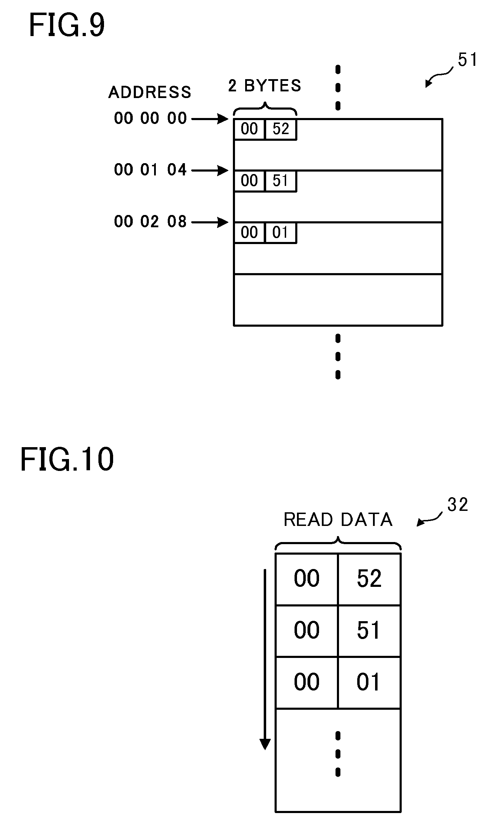

The first DMA controller 41 is activated with a given control signal from the CPU 10, acquires a set of command parameters as described above from the first internal memory 31 in sequence, and instructs the external memory interface 70 to read data based on the set of command parameters. For example, if the first set of command parameters stored in the first internal memory 31 configures a reading start address "0x000000" and a reading data size "2 (bytes)" as shown in FIG. 8, the external memory interface 70 reads data "0052h" as shown in FIG. 9. The external memory interface 70 supplies the read data to the second DMA controller 42.

The second DMA controller 42 is activated with a given control signal from the CPU 10 in sync with the first DMA controller 41. The second DMA controller 42 stores the data (the read data) supplied from the external memory interface 70 in the second internal memory 32 in sequence (see FIG. 10). The second DMA controller 42 comprises a not-shown search data register in which data (for example, a sector number) of which a location is required to be identified by the CPU 10 and are stored by the CPU 10 before the second DMA controller 42 is activated.

The second DMA controller 42 determines whether the read data received from the external memory interface 70 match the data stored in the search data register. As a result, if these data match with each other, the second DMA controller 42 outputs a given interrupt signal. In sync with the output of an interrupt signal, the first and second DMA controllers 41 and 42 stop operating.

On the other hand, if no read data are found to match the data stored in the search data register and data are continuously read from the external memory 51, then, the first DMA controller 41 ends up acquiring all sets of command parameters from the first internal memory 31. In such a case, the first DMA controller 41 outputs the above interrupt signal.

As the above interrupt signal is output from the second DMA controller 42 or from the first DMA controller 41, the CPU 10 accesses the second internal memory 32, finds out whether desired data are present/absent in the read data stored. If desired data are present, the CPU 10 identifies the location (a physical address) where the data are stored from the correspondence to the first internal memory 31 and the like.

On the other hand, if desired data are not present in the second internal memory 32, the CPU 10 clears the first internal memory 31 to zero, stores multiple new sets of command parameters, and clears the second internal memory 32 to zero. Then, the CPU 10 activates the first and second DMA controllers 41 and 42 with a given control signal again so that the controllers execute the data reading procedure.

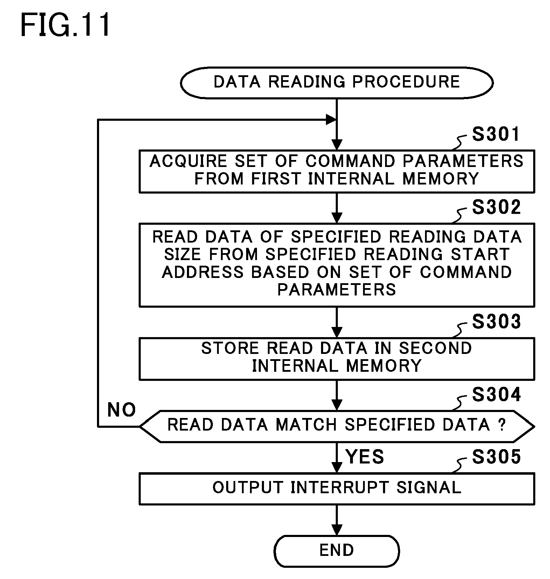

FIG. 11 is a flowchart showing the proceeding of the data reading procedure of this embodiment executed by the first and second DMA controllers 41 and 42 and external memory interface 70 cooperating with each other. As described above, this data reading procedure starts as the CPU 10 outputs a given control signal.

The first DMA controller 41 acquires a set of command parameters from the first internal memory 31 (Step S301). Then, the first DMA controller 41 instructs the external memory interface 70 to read data based on the set of command parameter. The external memory interface 70 accesses the external memory 51 and reads data of the specified reading data size from the specified reading start address (Step S302). The external memory interface 70 supplies the data that were read (read data) to the second DMA controller 42.

The second DMA controller 42 stores the read data supplied from the external memory interface 70 in the second internal memory 32 (Step S303). Furthermore, the second DMA controller 42 determines whether the read data match data specified by the CPU 10 in advance (Step S304).

As a result, if these data match with each other (Step S304; YES), the second DMA controller 42 outputs a given interrupt signal (Step S305). In sync with the output of an interrupt signal, the first and second DMA controllers 41 and 42 stop operating, and the data reading procedure ends.

On the other hand, if these data do not match with each other (Step S304; NO), the first DMA controller 41 acquires the next set of command parameters from the first internal memory 31 (Step S301). From then on, the above processing is repeatedly executed until data matching up to the data specified by the CPU 10 are read (Step S304; YES). As described above, if the first DMA controller 41 has acquired all sets of command parameters from the first internal memory 31, the above interrupt signal is output and the data reading procedure ends.

Generally, a serial flash memory has merits such as low cost, power saving, reliable, and easy installation design, and demerits such as slow access speed. However, the access speed can be improved by providing two DMA controllers and using them as described above as in this embodiment.

Furthermore, like the DMA controller 40 of Embodiment 2, the second DMA controller 42 outputs an interrupt signal and immediately notifies the CPU 10 that data reading operation ends when data desired by the CPU 10 have been read. Therefore, the processing is executed more efficiently and at a higher speed.

This application is based on Japanese Patent Application No. 2010-210798, filed on September 21, 2010.

### Industrial Applicability

The present invention is preferably used in various electronic devices using a readable/writable storage medium such as a flash memory.

### Description of Reference Numerals

10
CPU 20
ROM 30
RAM
31 First internal memory
32 Second internal memory
40 DMA controller
401 Controller
402 Reading start address register
403 Reading data size register
404 Offset value register
405 Repetition upper limit value register
406 Repetition counter register
407 Search data register
41 First DMA controller
42 Second DMA controller
50 Storage medium
51 External memory
60 Bus
61 Internal bus
62 External bus

## Claims

1. A data reading device, comprising: a CPU (10); a first DMA controller (41); a second DMA controller (42); an external memory (51); an external memory interface (70); a first internal memory (31); and a second internal memory (32), wherein
the CPU (10) stores in the first internal memory (31) a given number of sets of command parameters comprising a reading start address from which reading starts and the size of data to be read in a single reading operation;
the first DMA controller (41) acquires a set of command parameters from the first internal memory (31) in sequence, and instructs the external memory interface (70) to execute the reading operation based on the set of command parameters;
**characterized in that**:
the external memory interface (70) transfers the data read from the external memory (51) during the reading operation to the second DMA controller (42);
the second DMA controller (42) writes the data transferred from the external memory interface (70) in the second internal memory (32) in sequence, determines whether the transferred data match data specified by the CPU (10) in advance, and if these data match with each other, outputs a given interrupt signal indicating that the processing of the first and second DMA controllers (41, 42) ends; and
the CPU (10) accesses the second internal memory (32) and searches for the specified data when the interrupt signal is output.

2. The data reading device according to Claim 1, **characterized in that** the first DMA controller (41) outputs the interrupt signal when there is no set of command parameters to acquire in the first internal memory (31).

3. The data reading device according to Claim 1 or 2, **characterized in that** the external memory (51) is a serial flash memory.

## Patentansprüche

1. Ein Datenlesegerät umfassend:
eine CPU (10); einen ersten DMA-Controller (41); einen zweiten DMA-Controller (42); einen externen Speicher (51); ein externes Speicher-Interface (70); einen ersten internen Speicher (31) und einen zweiten internen Speicher (32),
wobei die CPU (10) in dem ersten internen Speicher (31) speichert: eine gegebene Anzahl von Mengen von Befehlsparametern umfassend eine Lesestartadresse, von der aus ein Lesen startet, und die Größe von Daten, die in einem einzelnen Lesevorgang zu lesen sind;
wobei der erste DMA-Controller (41) eine Menge von Befehlsparametern der Reihe nach von dem ersten internen Speicher (31) erlangt und das externe Speicher-Interface (70) anweist, den Lesevorgang basierend auf der Menge von Befehlsparametern durchzuführen;
**dadurch gekennzeichnet, dass**
das externe Speicher-Interface (70) die von dem externen Speicher (51) während des Lesevorgangs gelesenen Daten an den zweiten DMA-Controller (42) überträgt;
dass der zweite DMA-Controller (42) die von dem externen Speicher-Interface (70) übertragenen Daten der Reihe nach in den zweiten internen Speicher (32) schreibt, bestimmt, ob die übertragenen Daten Daten, die durch die CPU (10) vorab spezifiziert werden, gleichkommen, und, wenn diese Daten einander gleichkommen, ein gegebenes Interrupt-Signal, das anzeigt, dass die Verarbeitung des ersten und des zweiten DMA-Controllers (41, 42) endet, ausgibt; und
dass die CPU (10) zugreift auf den zweiten internen Speicher (32) und nach den spezifizierten Daten sucht, wenn das Interrupt-Signal ausgegeben wird.

2. Das Datenlesegerät nach Anspruch 1, **dadurch gekennzeichnet, dass** der erste DMA-Controller (41) das Interrupt-Signal ausgibt, wenn es keine Menge von Befehlsparametern zu erlangen gibt in dem ersten internen Speicher (31).

3. Das Datenlesegerät gemäß Anspruch 1 oder Anspruch 2, **dadurch gekennzeichnet, dass** der externe Speicher (51) ein serieller Flash-Speicher ist.

## Revendications

1. Dispositif de lecture de données, comprenant : une unité CPU (10) ; un premier contrôleur d'accès DMA (41) ; un second contrôleur d'accès DMA (42) ; une mémoire externe (51) ; une interface de mémoire externe (70) ; une première mémoire interne (31) ; et une seconde mémoire interne (32), dans lequel
l'unité CPU (10) stocke, dans la première mémoire interne (31), un nombre donné d'ensembles de paramètres de commande comprenant une adresse de début de lecture à partir de laquelle la lecture commence, et la taille des données à lire au cours d'une opération de lecture unique ;
le premier contrôleur d'accès DMA (41) acquiert un ensemble de paramètres de commande auprès de la première mémoire interne (31) en séquence, et ordonne à l'interface de mémoire externe (70) d'exécuter l'opération de lecture sur la base de l'ensemble de paramètres de commande ;
**caractérisé en ce que** :
l'interface de mémoire externe (70) transfère les données lues à partir de la mémoire externe (51) au cours de l'opération de lecture, au second contrôleur d'accès DMA (42) ;
le second contrôleur d'accès DMA (42) écrit les données transférées à partir de l'interface de mémoire externe (70), dans la seconde mémoire interne (32), en séquence, il détermine si les données transférées correspondent à des données spécifiées par l'unité CPU (10) au préalable, et si ces données correspondent mutuellement, il génère en sortie un signal d'interruption donné indiquant que le traitement des premier et second contrôleurs d'accès DMA (41, 42) se termine ; et
l'unité CPU (10) accède à la seconde mémoire interne (32) et recherche les données spécifiées lorsque le signal d'interruption est généré en sortie.

2. Dispositif de lecture de données selon la revendication 1, **caractérisé en ce que** le premier contrôleur d'accès DMA (41) génère en sortie le signal d'interruption en l'absence d'ensemble de paramètres de commande à acquérir dans la première mémoire interne (31).

3. Dispositif de lecture de données selon la revendication 1 ou 2, **caractérisé en ce que** la mémoire externe (51) est une mémoire flash sérielle.
